# FASCICULE DE BREVET EUROPEEN

(11) **EP 2 406 201 B1**
(45) Date de publication et mention de la délivrance du brevet: **13.06.2018**
(21) Numéro de dépôt: 10717228.0
(22) Date de dépôt: 11.03.2010
(51) Int. Cl.: C04B 35/109, C04B 35/484, C04B 35/626, C09K 3/14

(54) **MELANGE DE GRAINS D'ALUMINE-ZIRCONE FONDU**
GEMISCH AUS GESCHMOLZENEN ALUMINIUM-/ZIRKONKÖRNERN
MOLTEN ALUMINA/ZIRCONIA GRAIN MIXTURE

(30) Priorité: 11.03.2009 FR 0901147
(43) Date de publication de la demande: 18.01.2012
(73) Titulaire: Saint-Gobain Centre de Recherches et d'Etudes Européen, 92400 Courbevoie (FR)
(72) Inventeur: MARLIN, Samuel, F-13750 Plan D'orgon (FR); LANGOHR, David, 78700 Conflans-Sainte-Honorine (FR); GAETA, Anthony, New York New York 14094 (US)
(74) Mandataire: Nony
(86) Numéro de dépôt international: PCT/IB2010/051061
(87) Numéro de publication internationale: WO 2010/103484

(56) Documents cités:
- FR-A1- 2 872 157
- US-A- 4 457 767
- US-A1- 2004 040 218

## Description

### Domaine technique

La présente invention concerne un mélange de grains céramiques fondus constitués essentiellement d'alumine et de zircone dans des proportions proches de l'eutectique binaire (42 % en masse de zircone) et présentant des performances abrasives améliorées. L'invention concerne également un outil abrasif comportant un mélange de grains conforme à l'invention, et un procédé de fabrication d'un mélange de grains selon l'invention.

### Art antérieur

On classe généralement les outils abrasifs selon le mode de mise en forme des grains céramiques qui les constituent : abrasifs libres (utilisation en projection ou en suspension, sans support), abrasifs appliqués (support de type toiles ou papiers, où les grains sont disposés sur quelques couches) et abrasifs agglomérés (sous forme de meules circulaires, de bâtons, etc.). Dans ces derniers, les grains abrasifs sont pressés avec un liant organique ou vitreux (en ce cas, un liant constitué d'oxydes, essentiellement silicaté). Ces grains doivent présenter eux-mêmes de bonnes propriétés mécaniques à l'abrasion (ténacité notamment), et donner lieu à une bonne cohésion mécanique avec le liant (solidité de l'interface). On trouve aujourd'hui différentes familles de grains abrasifs permettant de couvrir une large gamme d'applications et de performance : les grains d'oxydes synthétisés par fusion en particulier offrent un excellent compromis qualité / coût de fabrication.

Dans la gamme des grains fondus, les matériaux à base d'alumine et de zircone sont connus depuis US-A-3,181,939. Ces grains sont généralement composés de 10 à 60 % de zircone, de 0 à 10 % d'un additif, le complément étant l'alumine. En pratique, le taux de zircone des produits du commerce se situe soit autour de 25 %, soit autour de la valeur de l'eutectique alumine-zircone située à environ 42 % de zircone, généralement de 35 à 50 %, comme décrit dans le brevet US-A-3,891,408. Ce brevet indique que les produits dont la composition est proche de l'eutectique offrent de meilleures performances à l'application que les grains alumineux surtout s'ils sont solidifiés très rapidement de manière à ce que, dans les colonies eutectiques, les espaces interlamellaires ou interfibres soient inférieurs à 4000 Å (avec des colonies eutectiques orientées perpendiculairement au front de solidification). Ce type de structure unique réalise un excellent compromis entre la résistance mécanique requise pour une durée d'utilisation maximale du grain et la microfracturation nécessaire à une bonne régénération des surfaces de coupe.

Comme additifs, on connaît l'oxyde d'yttrium, ajouté jusqu'à 2 % selon US-A-4,457,767 ou l'oxyde de titane ajouté jusqu'à 10 % selon le brevet DE-C1-4306966. Ces additifs améliorent le pouvoir abrasif des grains alumine-zircone. L'oxyde de magnésium est également un additif possible, mais au-delà d'une teneur de quelques points, sa présence conduit à la formation de spinelle avec l'alumine jusqu'à disparition du corindon, ce qui conduit à une moindre performance mécanique.

A titre d'exemple des grains, on peut citer les grains décrits dans US-A-4,457,767. Ces grains contiennent typiquement 39 % en masse de zircone et 0,8 % de Y₂O₃, moins de 0,5 % d'impuretés, le complément étant de l'alumine. Des mélanges de ces grains sont largement utilisés pour les abrasifs appliqués ou les meules abrasives à liant organique dans des opérations à taux d'enlèvement de matière importants (dégrossissage, tronçonnage...), sur acier inox notamment.

On connaît encore de FR 2 787 106 ou de US 2004/0040218 des grains comportant une teneur en zircone comprise entre 10 et 60 % et une teneur en Al₂O₃ comprise entre 38 à 90 %. Ces grains d'alumine-zircone fondus sont fabriqués par fusion de matières premières en milieu réducteur (avec notamment un ajout d'une source de carbone, par exemple de coke de pétrole, de brai ou de charbon, dans le four). La matière en fusion est ensuite refroidie, de préférence rapidement pour favoriser l'obtention de structures fines et orientées, par exemple au moyen d'un dispositif de coulée entre plaques minces métalliques tel que celui présenté dans le brevet US-A-3,993,119. Le matériau refroidi est enfin broyé, par exemple au moyen de broyeurs à rouleaux, puis tamisé et classifié en séries de distributions granulométriques (« grits ») répondant à des normes précises (par exemple FEPA). Les grains ainsi fabriqués sont compacts et peu réduits. Ils présentent de bonnes propriétés mécaniques et peuvent avantageusement être utilisés en meules à liant vitreux.

Des mélanges de grains abrasifs fondus alumine - zircone sont encore décrits dans FR 2 872 157. Ils présentent des propriétés abrasives remarquables, notamment dans certaines conditions de meulage à faible pression sur un acier inox ou plus généralement sur un acier à forte teneur en carbone et de haute dureté.

Les propriétés abrasives des outils abrasifs diminuent au fur et à mesure de leur utilisation, jusqu'à les rendre inexploitables.

US 5,161,696 divulgue l'utilisation de grains de corindon brun dits « blocky » présentant un rapport d'aspect inférieur à 2 :1 pour des abrasifs agglomérés, les poudres utilisées comportant cependant entre 20 % et 30 % de grains de corindon brun dits « sharp » présentant un rapport d'aspect supérieur à 3 :1. Pour des abrasifs appliqués, ce document divulgue l'utilisation de grains de corindon brun « sharp », les poudres utilisées pouvant cependant comporter jusqu'à 30 % à 40 % de grains « blocky ».

Il existe donc un besoin permanent pour un mélange de grains abrasifs fondus alumine - zircone présentant une durée de vie supérieure. Un but de l'invention est de répondre à ce besoin.

### Résumé de l'invention

Selon l'invention, on atteint ce but au moyen d'un mélange de grains d'alumine-zircone fondus présentant l'analyse chimique suivante, en pourcentages en poids,

| | |
|---|---|
| ZrO₂ + HfO₂ : | 35 - 45,5 % |
| Al₂O₃ : | 43,7 - 65 % |
| SiO₂ : | < 0,8 % |
| Autres oxydes : | < 10 % |

ce mélange de grains étant remarquable en ce qu'il présente une densité non tassée, en anglais « Loose packed density » ou LPD, respectant au moins un des critères suivants :
(1) plus de 97% en masse des grains ne traversent pas un tamis de maille carrée de 1400 µm de côté et moins de 20 % en masse des grains ne traversent pas un tamis de maille carrée de 2360 µm de côté (condition granulométrique C1), et la densité non tassée est supérieure à 2,18, de préférence supérieure à 2,22 et inférieure à 2,43, de préférence inférieure à 2,36 (condition densimétrique D1) ;
(2) plus de 96% en masse des grains ne traversent pas un tamis de maille carrée de 1000 µm de côté et moins de 3 % en masse des grains ne traversent pas un tamis de maille carrée de 1700 µm de côté (condition granulométrique C2), et la densité non tassée est supérieure à 2,04, de préférence supérieure à 2,08 et inférieure à 2,26, de préférence inférieure à 2,19, de préférence inférieure à 2,17 (condition densimétrique D2) ;
(3) plus de 92 % en masse des grains ne traversent pas un tamis de maille carrée de 600 µm de côté et moins de 18 % en masse des grains ne traversent pas un tamis de maille carrée de 850 µm de côté (condition granulométrique C3), et la densité non tassée est supérieure à 1,94, de préférence supérieure à 1,98 et inférieure à 2,10, de préférence inférieure à 2,08, de préférence inférieure à 2,05 (condition densimétrique D3) ;
(4) le mélange de grains présente un taux de grains contenant des inclusions inférieur à 5 %, de préférence inférieur à 2 %, la concentration de nodules mesurée sur une section d'un grain quelconque dudit mélange étant supérieure à 500 nodules par mm² dans au moins 50 % des grains observés, plus de 92 % en masse des grains ne traversent pas un tamis de maille carrée de 425 µm de côté et moins de 18 % en masse des grains ne traversent pas un tamis de maille carrée de 600 µm de côté (condition granulométrique C4), la densité non tassée est supérieure à 1,85, de préférence supérieure à 1,89 et inférieure à 2,00, de préférence inférieure à 1,91 (condition densimétrique D4) ;
(5) le mélange de grains présente un taux de grains contenant des inclusions inférieur à 5 %, de préférence inférieur à 2 %, la concentration de nodules mesurée sur une section d'un grain quelconque dudit mélange étant supérieure à 500 nodules par mm² dans au moins 50 % des grains observés, plus de 96 % en masse des grains ne traversent pas un tamis de maille carrée de 300 µm de côté et moins de 7 % en masse des grains ne traversent pas un tamis de maille carrée de 500 µm de côté (condition granulométrique C5), et la densité non tassée est supérieure à 1,83, de préférence supérieure à 1,86 et inférieure à 1,97, voire inférieure à 1,96 ou inférieure à 1,95 (condition densimétrique D5) ;
(6) le mélange de grains présente un taux de grains contenant des inclusions inférieur à 5 %, de préférence inférieur à 2 %, la concentration de nodules mesurée sur une section d'un grain quelconque dudit mélange étant supérieure à 500 nodules par mm² dans au moins 50 % des grains observés, plus de 96 % en masse des grains ne traversent pas un tamis de maille carrée de 250 µm de côté et moins de 3 % en masse des grains ne traversent pas un tamis de maille carrée de 425 µm de côté (condition granulométrique C6), et la densité non tassée est supérieure à 1,82, de préférence supérieure à 1,86 et inférieure à 1,95, de préférence inférieure à 1,93 (condition densimétrique D6) ;
(7) le mélange de grains présente un taux de grains contenant des inclusions inférieur à 5 %, de préférence inférieur à 2 %, la concentration de nodules mesurée sur une section d'un grain quelconque dudit mélange étant supérieure à 500 nodules par mm² dans au moins 50 % des grains observés, plus de 96 % en masse des grains ne traversent pas un tamis de maille carrée de 150 µm de côté et moins de 3 % en masse des grains ne traversent pas un tamis de maille carrée de 250 µm de côté (condition granulométrique C7), et la densité non tassée est supérieure à 1,79, de préférence supérieure à 1,83 et inférieure à 1,93, de préférence inférieure à 1,91(condition densimétrique D7).

Comme on le verra plus en détail dans la suite de la description, et contrairement à l'enseignement de US 5,161,696, les inventeurs ont découvert qu'il ne suffit pas d'augmenter la quantité de grains abrasifs présentant une forme allongée pour augmenter la durée de vie des grains. Ils ont en effet mis en évidence que cet effet est conditionné à la composition chimique des grains et que, pour une plage de compositions déterminée, une corrélation précise entre la densité non tassée d'un mélange et sa distribution granulométrique est indispensable.

Un mélange de grains selon l'invention peut encore présenter une ou plusieurs des caractéristiques suivantes :
- En pourcentage en poids,

| | |
|---|---|
| ZrO₂ + HfO₂ : | 38 - 45,5 % |
| Al₂O₃ : | 43,7 - 62 % |
| SiO₂ : | < 0,8 % |
| Autres oxydes : | < 10 %. |

- En pourcentage en poids,

| | |
|---|---|
| ZrO₂ + HfO₂ : | 40 - 45,5 % |
| Al₂O₃ : | 43,7 - 60 % |

| | |
|---|---|
| SiO₂ : | < 0,8 % |
| Autres oxydes : | < 10 %. |

- En pourcentage en poids,

| | |
|---|---|
| ZrO₂ + HfO₂ : | 42 - 45 % |
| Al₂O₃ : | 44,2 - 58 % |
| SiO₂ : | < 0,8 % |
| Autres oxydes : | < 10 %. |

- Les « autres oxydes » comporte moins un additif, de préférence choisi dans le groupe formé par l'oxyde d'yttrium, l'oxyde de titane, les oxydes de magnésium, de calcium, les oxydes de néodyme, de lanthane, de cérium, de dysprosium, d'erbium et de tout autre composé de la famille des terres rares, ou un mélange de ceux-ci.
- En pourcentage en poids,

| | |
|---|---|
| Y₂O₃ : | 0,1 -1,2 %, et/ou |
| TiO₂ : | < 3 %, et/ou |
| SiO₂ : | < 0,4 %. |

- La teneur en oxyde de titane TiO₂ est inférieure à 0,5 %, inférieure à 0,2 %, voire inférieure à 0,15 %.
- Y₂O₃ ≥ 0,4% et/ou Y₂O₃ : ≤ 0,6 %,
- Impuretés : < 1,2 %.
- Les grains respectant le critère (1), (2), (3), (4), (5), (6) ou (7) présentent un Grit F10, P16, P24, P36, P40, P50 ou P80, respectivement, les grits étant mesurés selon la norme FEPA Standard 42-GB-1984, R1993 pour le grits F10 et selon la norme FEPA Standard 43-GB-1984, R1993 pour les grits P16, P24, P36, P40, P50 ou P80, de la Fédération Européenne des Fabricants de Produits Abrasifs, couramment utilisée dans le domaine des grains abrasifs.

De préférence, un mélange de grains selon l'invention présente un taux de grains contenant des inclusions inférieur à 5 %, de préférence inférieur à 2 %, la concentration de nodules mesurée sur une section d'un grain quelconque dudit mélange étant supérieure à 500 nodules par mm² dans au moins 50 %, de préférence 80 %, de préférence encore 90 % des grains observés.

Des mélanges de grains abrasifs fondus alumine - zircone présentant cette microstructure sont par exemple décrits dans FR 2 872 157. L'appellation « mNZP » désigne la composition chimique et la microstructure des mélanges de grains décrits dans FR 2 872 157.

De manière surprenante, les inventeurs ont découvert que le respect d'au moins un des critères (1) à (7) ci-dessus permet d'augmenter de manière extraordinaire les durées de vie des grains lorsque le mélange de grains est un mélange de grains mNZP. Les durées de vie obtenues peuvent ainsi être 30 %, 40 %, voire 50 % supérieures à celles obtenues à partir des mélanges de grains actuels.

Un mélange de grains selon l'invention peut présenter encore une ou plusieurs des caractéristiques suivantes :
- La proportion de grains présentant une concentration de nodules supérieure à 500 nodules par mm² est, en pourcentage en nombre, d'au moins 50 %, de préférence 80 %, de préférence encore 90 %. De préférence encore, sensiblement tous les grains du mélange (au moins 99 %) présentent une telle concentration de nodules.
- Ladite concentration de nodules est comprise entre 600 et 3500 nodules par mm², le taux de grains du mélange contenant des inclusions restant inférieur à 5 %, de préférence inférieur à 4 %, de préférence encore inférieur à 2 %.
- Ladite concentration de nodules est supérieure à 600 nodules par mm², de préférence à 900 nodules par mm².
- Ladite concentration de nodules est inférieure à 3500 nodules/mm², à 2500 nodules/mm², de préférence à 2000 nodules/mm², de préférence encore à 1500 nodules/mm².
- Ledit mélange présente un taux de grains contenant des inclusions d'au plus 1,5 %.
- Le taux de grains contenant de la zircone primaire est compris entre 20 et 45 %.
- Le taux de grains contenant du corindon primaire est compris entre 0 et 20 %, de préférence compris entre 0 et 10 %.
- Le sous-ensemble formé par les grains dudit mélange ayant une taille comprise entre 500 et 600 µm présente un taux de grains contenant des inclusions inférieur à 2%, de préférence 1,5 %, et/ou un taux de grains contenant de la zircone primaire compris entre 20 et 45 % et/ou un taux de grains contenant du corindon primaire compris entre 0 et 20 %.

Un mélange de grains selon l'invention peut encore comporter une ou plusieurs des caractéristiques relatives à la microstructure et à la composition des grains d'un mélange de grains tel que décrit dans FR 2 872 157, incorporé par référence.

L'invention concerne encore un outil abrasif comportant un mélange de grains abrasifs liés par un liant ou déposés en couche sur un support souple et retenus par un liant, remarquable en ce que ledit mélange est conforme à l'invention.

L'invention concerne aussi un procédé de fabrication d'un mélange de grains selon l'invention, comprenant les étapes successives suivantes :
A') Détermination si une des conditions granulométriques d'un des critères (1) à (7) est remplie ;
B') Dans ce cas, adaptation de la densité non tassée de manière à respecter la condition densimétrique correspondante.

L'adaptation de la densité non tassée peut être effectuée de différentes manières.

En particulier, pour modifier la densité non tassée d'un mélange de grains, il est possible d'en faire varier la quantité de grains allongés.

Par exemple, à l'étape B'), on peut ajouter au mélange de grains un autre mélange de grains, de préférence de même nature (composition, microstructure), de préférence respectant également ladite condition granulométrique (pour éviter que ladite condition granulométrique ne soit plus respectée par le mélange résultant de l'ajout), mais dont les grains présentent, en moyenne, une morphologie différente. Par exemple, l'ajout d'un tel mélange de grains présentant, en moyenne, une forme plus allongée permet de diminuer la densité non tassée.

Il est également possible, à l'étape B'), de broyer le mélange de grains de manière à modifier la morphologie moyenne des grains. Par exemple, limiter le nombre de passages à travers un broyeur à rouleaux augmente la proportion de grains allongés, et donc diminue la densité non tassée. Cette procédure peut cependant conduire à un mélange de grains ne respectant plus ladite condition granulométrique.

Par ailleurs, la procédure de broyage utilisée classiquement avec un broyeur à rouleaux consiste à renvoyer une partie des grains ayant traversé le broyeur en amont du broyeur. Chaque grain passe ainsi, en moyenne, deux ou trois fois à travers le broyeur. Il en résulte une augmentation sensible de la densité non tassée.

Les essais montrent qu'un tel broyage conventionnel conduit, pour des grains présentant des compositions et microstructures conformes à celles des grains d'un mélange selon l'invention, à des densités non tassées supérieures à celles des mélanges de grains selon l'invention. Pour fabriquer un mélange de grains selon l'invention, on utilise un broyeur à rouleaux, réglé de manière que les rouleaux soient espacés d'une distance « e » inférieure ou égale à 2 mm, de préférence inférieure à 1 mm, de préférence en contact (écartement entre rouleaux nul). De préférence encore, la force minimale d'écartement des rouleaux l'un de l'autre, « F », est supérieure à 0,15 kN, de préférence supérieure à 0,2 kN, voire supérieure à 0,23 kN et/ou inférieure à 3,1.(e)²+22,81.(e)+2 kN, « e » étant exprimée en mm. De préférence, les rouleaux sont en contact (soit e=0), et la force minimale d'écartement F est inférieure à 1,5 kN, de préférence inférieure à 1 kN, de préférence inférieure à 0,5 kN.

L'invention concerne donc enfin un procédé de broyage de grains d'alumine-zircone fondus dans lequel les grains sont broyés par un unique passage dans un broyeur à rouleaux comportant au moins deux rouleaux écartés d'une distance « e » inférieure ou égale à 2 mm, de préférence inférieure à 1 mm, de préférence en contact, avec application d'une force minimale d'écartement «F» supérieure à 0,15 kN, de préférence supérieure à 0,2 kN, voire supérieure à 0,23 kN et/ou inférieure à 3,1.(e)²+22,81.(e)+2 kN, « e » étant exprimée en mm. De préférence, les rouleaux sont en contact (soit e=0), et la force minimale d'écartement F est inférieure à 1,5 kN, de préférence inférieure à 1 kN, de préférence inférieure à 0,5 kN.

### Définitions

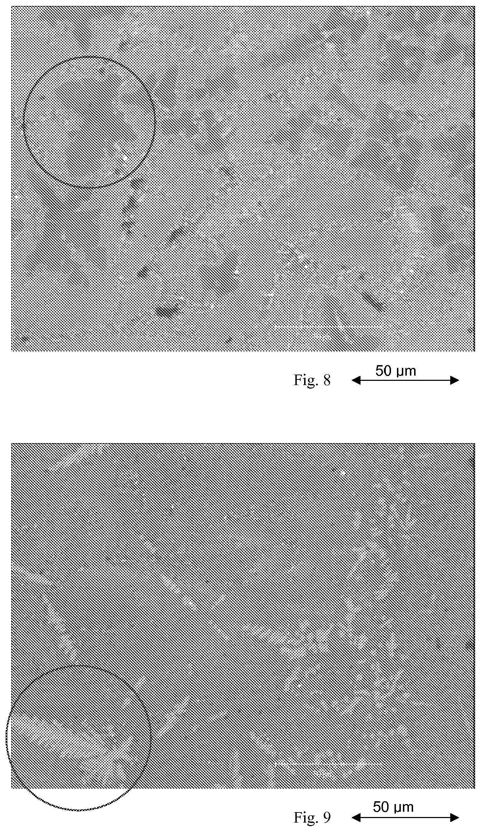

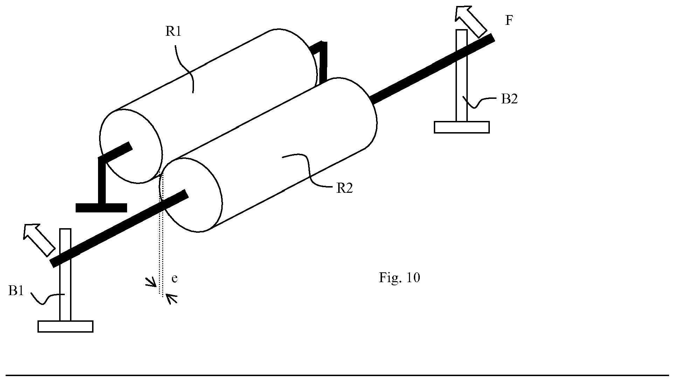

- La densité non tassée d'un mélange de grains est la masse de grains contenue dans un volume défini, sans application d'une contrainte visant à augmenter ladite masse. La densité non tassée est mesurée suivant la norme ANSI B74.4 - 1992, avec utilisation de l'installation A (« test Unit A » dans cette norme écrite en anglais).
- Les teneurs en oxydes d'un grain du mélange selon l'invention se rapportent aux teneurs globales pour chacun des éléments chimiques correspondants, exprimées sous la forme de l'oxyde le plus stable, selon la convention habituelle de l'industrie ; sont donc inclus les sous-oxydes et éventuellement nitrures, oxynitrures, carbures, oxycarbures, carbonitrures, ou même les espèces métalliques des éléments susmentionnés.
- Par « impuretés », on entend les constituants inévitables, introduits nécessairement avec les matières premières. En particulier les composés faisant partie du groupe des oxydes, nitrures, oxynitrures, carbures, oxycarbures, carbonitrures et espèces métalliques de sodium et autres alcalins, fer, vanadium et chrome sont des impuretés. A titre d'exemples, on peut citer CaO, Fe₂O₃ ou Na₂O. Le carbone résiduel fait partie des impuretés de la composition des produits selon l'invention. En revanche, l'oxyde d'hafhium n'est pas considéré comme une impureté.
- Dans un produit obtenu par fusion, HfO₂ n'est pas chimiquement dissociable de ZrO₂. Dans la composition chimique d'un tel produit, ZrO₂+HfO₂ désigne donc la teneur totale de ces deux oxydes. Cependant, selon la présente invention, HfO₂ n'est pas ajouté volontairement dans la charge de départ. HfO₂ ne désigne donc que les traces d'oxyde d'hafnium, cet oxyde étant toujours naturellement présent dans les sources de zircone à des teneurs généralement inférieures à 2 %. Par souci de clarté, on peut donc désigner indifféremment la teneur en zircone et en trace d'oxyde d'hafnium par ZrO₂+HfO₂ ou par ZrO₂, on encore par « teneur en zircone ».
- Le terme « additif » recouvre les additifs utilisés usuellement pour la fabrication de grains alumine zircone fondus, notamment les stabilisants de la zircone, et en particulier l'oxyde d'yttrium et l'oxyde de titane. En outre, sont inclus les oxydes de magnésium, de calcium et d'autres oxydes de terres rares, en particulier celui de néodyme, mais aussi ceux de lanthane, de cérium, de dysprosium et d'erbium. Le terme « additif » comprend également les mélanges desdites espèces. - Les grains fondus alumine-zircone du mélange selon l'invention présentent une teneur en ZrO₂ + HfO₂ comprise entre 35% et 45,5% de façon à favoriser la formation de structures eutectiques.
- De préférence, la zircone des grains du mélange selon l'invention est présente majoritairement sous sa forme allotropique quadratique au détriment de la forme monoclinique.
- On appelle « nodule » une particule dont le constituant principal est un métal ou une combinaison de métaux (généralement Al, Zr, ZrSi) ou est un carbure ou une combinaison de carbures (généralement ZrC, AlC) et dont la taille est inférieure ou égale à 10 µm. Les nodules se présentent principalement sous forme de particules sensiblement sphériques et discrètes (isolées les unes des autres) au sein d'un grain. La concentration de nodules est le nombre de nodules par mm² de surface d'une section d'un grain.
- On appelle « inclusion » une suite ou un amas de particules dont le constituant principal est un carbure ou une combinaison de carbures, généralement ZrC, en contact les unes avec les autres, la taille d'une inclusion étant supérieure à 10 µm. Une inclusion se présente généralement sous une forme allongée. Le taux de grains contenant des inclusions est le pourcentage en nombre de grains comportant au moins une inclusion.
- La « taille » d'un nodule ou d'une inclusion est définie par sa plus grande dimension mesurée dans le plan d'observation d'une section polie.
- On appelle couramment « zircone primaire » une dendrite dont le constituant principal est la zircone. Le taux de grains contenant de la zircone primaire est donné par le rapport, exprimé en pourcent, du nombre de grains présentant de la zircone primaire sur le nombre total de grains considérés sur un polissage. La zircone primaire apparaît de couleur gris clair au microscope, comme représenté sur la figure 9.
- On appelle couramment « corindon primaire » une dendrite dont le constituant principal est l'alumine. Le taux de grains contenant du corindon primaire est donné par le rapport, exprimé en pourcent, du nombre de grains présentant du corindon primaire sur le nombre total de grains considérés sur un polissage. Comme représenté sur la figure 8, le corindon primaire apparaît de couleur gris foncé au microscope.
- On appelle classiquement « dendrite » un cristal obtenu après croissance d'un germe et possédant une géométrie fractale ou pseudo fractale.
- Par « constituant principal », on entend le constituant dont la teneur en masse est la plus élevée. Généralement et sans que cela soit limitatif, cette teneur en masse est supérieure à 50 %, voire supérieure à 80 %.
- Par « grain fondu », ou plus largement « produit fondu », on entend un grain (ou produit) solide obtenu par solidification par refroidissement d'une matière en fusion.
- Une « matière en fusion » est une masse liquide qui peut contenir quelques particules solides, mais en une quantité insuffisante pour qu'elles puissent structurer ladite masse. Pour conserver sa forme, une matière en fusion doit être contenue dans un récipient.
- On appelle « force minimale d'écartement » des rouleaux d'un broyeur à rouleaux la force minimale qu'il est nécessaire d'exercer pour augmenter l'écartement d'un rouleau par rapport à l'autre à partir de la position au repos. La force minimale d'écartement est réglée « à vide », c'est-à-dire en l'absence de grains à broyer, classiquement par application d'une pression dite « pression à vide ».
   Comme représenté sur la figure 10, un broyeur à rouleaux comporte classiquement des premier et deuxième rouleaux, notés R1 et R2, respectivement, écartés au repos, ou « à vide », d'une distance « e ». Dans cet exemple, le premier rouleau R1 est fixe et le deuxième rouleau R2 est monté mobile de manière à pouvoir s'écarter du premier rouleau à partir de sa position de repos (telle que représentée).
   Dans la position de repos, la force minimale d'écartement maintient le rouleau R2 contre des butées B1 et B2, disposées de manière à assurer un écartement d'une distance «e». La force minimale d'écartement est la force F, représentée par les flèches, tendant à pousser les premier et deuxième rouleaux l'un vers l'autre et qu'il est nécessaire de dépasser pour les écarter l'un de l'autre au-delà de la distance « e ». En service, des grains de dimensions supérieures à « e » et difficiles à éclater pourront lors de leur passage exercer sur les rouleaux une force d'écartement supérieure à F, et ainsi écarter ces rouleaux de manière à les traverser.
- Dans la présente description, sauf mention contraire, toutes les compositions d'un grain sont données en pourcentages massiques, sur la base de la masse totale du grain.

D'autres caractéristiques et avantages de la présente invention apparaîtront à la lecture de la description qui va suivre et à l'examen du dessin annexé dans lequel :

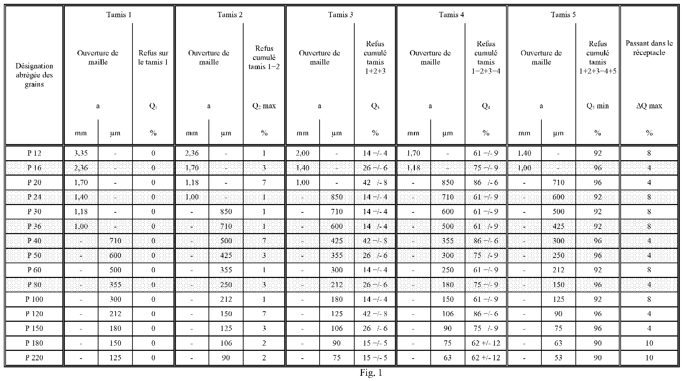

- la figure 1 fournit notamment les caractéristiques granulométriques des grits P16, P24, P36, P40, P50 et P80 ;

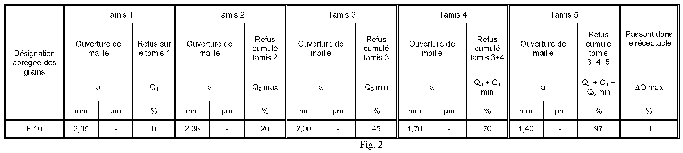

- la figure 2 fournit les caractéristiques granulométriques du grit F10 ;
- la figure 3 fournit les caractéristiques chimiques et la densité non tassée des mélanges testés ;
- la figure 4 fournit une représentation graphique des résultats d'usinage pour une pression sur la bande permettant un taux d'enlèvement de métal de 5,9 in³/min/in ;
- la figure 5 fournit une représentation graphique des résultats d'usinage pour une pression sur la bande permettant un taux d'enlèvement de métal de 2,3 in³/min/in ;
- les figures 6 à 9 représentent des photographies de la surface d'un grain d'un mélange de grains mNZP sur lesquelles ont été entourés les nodules, une inclusion, une dendrite de corindon primaire, et une dendrite de zircone primaire, respectivement ;
- la figure 10 représente schématiquement un broyeur à rouleaux.

Un procédé pouvant être utilisé pour fabriquer un mélange de grains selon l'invention peut comprendre les étapes suivantes :
A) mélange de matières premières choisies de manière que les grains du mélange obtenus à l'issue de l'étape D) aient une composition chimique conforme à celle des grains d'un mélange selon l'invention,
B) fusion desdites matières premières mélangées jusqu'à obtention d'un liquide en fusion, par exemple dans un four à arc électrique,
C) refroidissement par trempe dudit liquide en fusion, de préférence de manière que le liquide fondu soit entièrement solidifié en moins de 3 minutes, par exemple par trempe, jusqu'à obtention d'une masse solide,
D) broyage de ladite masse solide de manière à obtenir un mélange de grains, en particulier au moyen d'un broyeur à rouleaux,
E) vérification, par exemple par échantillonnage, de la concentration de nodules des grains et du taux de grains contenant des inclusions du mélange de grains obtenu et le cas échéant, reprise des étapes A) à D) en modifiant les paramètres des étapes B) et/ou C),
F) optionnellement, tamisage des grains obtenus à l'étape D),
G) contrôle si le mélange de grains obtenu à l'issue de l'étape D) ou de l'étape F) respecte un des critères (1) à (7) et, si ce n'est le cas, modification dudit mélange, par exemple par un broyage et/ou un tamisage supplémentaire(s) ou un mélange avec un autre mélange présentant des caractéristiques différentes, de manière à ce qu'il respecte un desdits critères.

D'autres caractéristiques de ce procédé peuvent être également tirées de FR 2 872 157. Ce document fournit également des précisions sur la nature et de la microstructure des grains mNZP, ainsi que sur leurs propriétés avantageuses.

### Exemples

Les exemples non limitatifs suivants sont donnés dans le but d'illustrer l'invention.

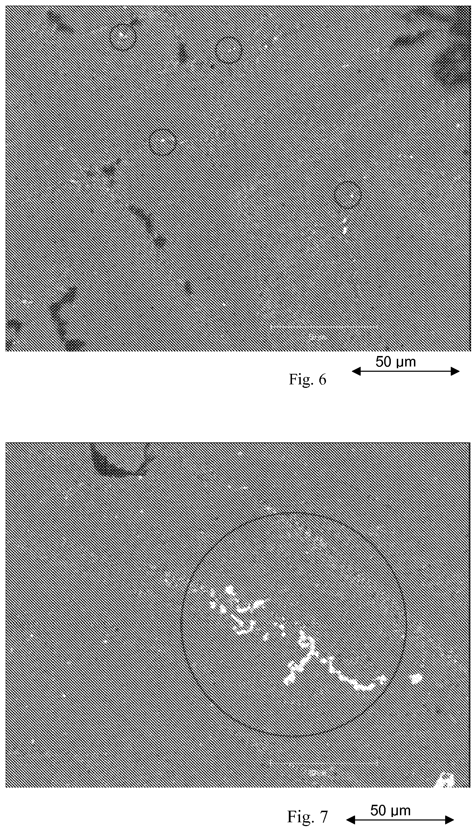

On mesure également par analyse visuelle de photos la concentration de nodules, le taux de grains contenant des inclusions, le taux de grains contenant de la zircone primaire, et le taux de grains contenant du corindon primaire. Les photos (figures 6 à 9) sont obtenues grâce à un microscope Reichert® relié à une station d'analyse d'image équipée du logiciel Visilog®. Les mesures sont réalisées sur une section polie, appelée « polissage », de 25 mm de diamètre, d'un ensemble cylindrique constitué par des grains abrasifs du mélange noyés dans une résine organique transparente, les grains incorporés dans le polissage présentant une taille qui est fonction du critère (1) à (7), telle que définie dans le tableau 1 ci-dessous :

**Tableau 1**

| Critère | Taille des grains prélevés pour l'observation (µm) | Grandissement utilisé pour l'observation des nodules (G1) | Grandissement utilisé pour l'observation des inclusions (G2) | Grandissement utilisé pour l'observation de la zircone primaire et/ou du corindon primaire (G3) |
|---|---|---|---|---|
| (1) | 2000 - 2360 | 80x | 20x | 40x |
| (2) | 1180 - 1400 | 160x | 40x | 80x |
| (3) | 710 - 850 | 200x | 50x | 100x |
| (4) | 500 - 600 | 200x | 50x | 100x |
| (5) | 425 - 500 | 200x | 50x | 100x |
| (6) | 300 - 355 | 200x | 50x | 100x |
| (7) | 180 - 212 | 400x | 100x | 200x |

Sur les photos prises au microscope, les nodules apparaissent en gris clair très brillant (voir figure 6).

Pour évaluer la concentration de nodules, on règle le microscope sur un grandissement G1, tel que défini dans le tableau 1 ci-dessus. On compte ensuite le nombre de points blancs brillants de dimensions inférieures ou égal à 10 µm, symptomatiques de la présence de nodules. En divisant le nombre de nodules par la surface de la zone observée, on obtient un nombre de nodules par mm² de surface de la section polie d'un grain. On répète le calcul sur deux autres zones de la section polie du grain. La moyenne des trois mesures donne la concentration de nodules pour un échantillon donné.

Les inclusions apparaissent en gris clair très brillant au microscope (voir photo de la figure 7). La nature carburée des inclusions les rend cependant moins brillants que les nodules de nature métallique et permet ainsi de les distinguer facilement des nodules en microscopie optique.

Pour évaluer le taux de grains contenant des inclusions, on règle le microscope sur un grandissement G2, tel que défini dans le tableau 1 ci-dessus. On compte ensuite sur l'image visualisée le nombre de grains possédant au moins une inclusion visible. Le comptage est effectué sur toute la surface du polissage de diamètre 25 mm. On considère qu'un grain possède une inclusion lorsque l'on observe au moins une tache brillante d'origine carburée supérieure à 10 µm à l'intérieur de celui-ci. La valeur du taux de grains contenant des inclusions est donnée par le rapport du nombre de grains possédant au moins une inclusion sur le nombre de grains comptés.

Pour évaluer le taux de grains contenant du corindon primaire, on règle le microscope sur un grandissement G3, tel que défini dans le tableau 1 ci-dessus. On compte ensuite le nombre de grains possédant des dendrites de corindon primaire et le nombre de grains exempts de corindon primaire jusqu'à avoir compté 100 grains de l'une ou l'autre des catégories. On considère qu'un grain possède du corindon primaire lorsque l'on observe au moins une dendrite de corindon primaire à l'intérieur de celui-ci. La valeur du taux de grains contenant du corindon primaire est donnée par le rapport, exprimé en pourcent, du nombre de grains possédant du corindon primaire sur le nombre total de grains comptés.

Pour évaluer le taux de grains contenant de la zircone primaire, on règle le microscope sur un grandissement G3, tel que défini dans le tableau 1 ci-dessus. On compte ensuite le nombre de grains possédant des dendrites de zircone primaire et le nombre de grains exempts de zircone primaire jusqu'à avoir compté 100 grains de l'une ou l'autre des catégories. On considère qu'un grain possède de la zircone primaire lorsque l'on observe au moins une dendrite de zircone primaire à l'intérieur de celui-ci. La valeur du taux de grains contenant de la zircone primaire est donnée par le rapport, exprimé en pourcent, du nombre de grains possédant de la zircone primaire sur le nombre total de grains comptés.

Les durées de vie de différents mélanges de grains ont été comparées :
(i) Mélanges de grains NZPlus®, présentant une composition et une microstructure conformes à celles des grains décrits dans US-A-4,457,767, dits « NZPlus® standards » ;
(ii) Mélanges de grains mNZP, présentant une composition et une microstructure conformes à celles des grains décrits dans FR 2 872 157, dits « mNZP standards » ;
(iii)Mélanges obtenus à partir d'un mélange de grains NZPlus®, mais respectant un des critères (1) à (7), dits « NZPlus® à densité non tassée contrôlée » ;
(iv)Mélanges obtenus à partir de mélanges de grains mNZP, mais respectant un des critères (1) à (7), dits « mNZP à densité non tassée contrôlée » ;

Les produits donnés en exemples ont été élaborés à partir des matières premières suivantes :
- Alumine Bayer® sous-calcinée à teneur en soude inférieure à 0,3 % ;
- Poudre de zircone à teneur en zircone+hafnium supérieure à 98 % pour le produit mNZP ;
- Poudre de zircone à teneur en zircone+hafhium supérieure à 85 % pour le produit NZPlus® ;
- Coke de pétrole ;
- Copeaux d'aluminium métallique.

L'oxyde d'yttrium, utilisé comme additif, est apporté par des matières pures à plus de 98 % d'oxyde d'yttrium.

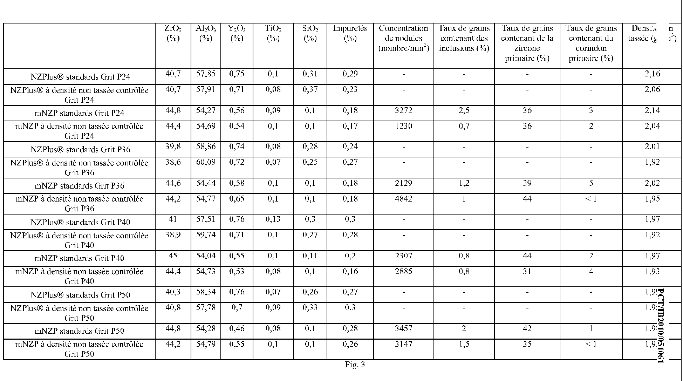

Le tableau de la figure 3 fournit la composition chimique et la densité non tassée des mélanges testés.

Le taux d'impuretés (hors carbone résiduel) varie entre 0,3 et 0,8 %. Le complément correspond au taux d'alumine.

Les grains ont été préparés suivant le procédé classique bien connu de l'homme de l'art : mélange des matières premières, fusion dans un four à arc électrique monophasé de type Héroult à électrodes en graphite- avec une cuve de four de 0,8 m de diamètre, une tension de 105-150V, une intensité de 2200 à 2500 A et une énergie électrique spécifique fournie de 2,2 à 2,8 kWh/kg chargé. On introduit dans la composition chargée au minimum 0,5 % (jusqu'à 3 %) de coke de pétrole selon l'état du four et environ 0,5 à 5,5 % de copeaux d'aluminium. Le liquide en fusion est ensuite brusquement refroidi au moyen d'un dispositif de coulée entre plaques minces métalliques tel que celui présenté dans le brevet US-A-3,993,119.

Pour élaborer les mélanges (i) et (ii), les masses solides sont broyées et classées selon leur granulométrie (norme FEPA). Le broyage est réalisé avec les deux rouleaux du broyeur en contact l'un avec l'autre, et une force minimale d'écartement F égale à 3 kN. Contrairement au réglage conventionnel qui comporte une recirculation des grains de manière qu'en moyenne, chaque grain passe entre deux et trois fois dans le broyeur, le broyage réalisé ne comporte pas de recirculation. La totalité des grains ne passe donc qu'une seule fois entre les rouleaux du broyeur. Il en résulte une densité non tassée légèrement plus faible que celle de mélanges NZPlus® et NZP conventionnels.

Pour élaborer les mélanges (iii) et (iv), les masses solides de NZPlus®, respectivement de mNZP sont concassées à l'aide d'un concasseur à mâchoires, puis tamisées à l'aide d'un tamis de 4 mesh (4760 microns). Les grains de NZPlus®, respectivement de mNZP, passant à travers ce tamis sont broyés dans un broyeur à rouleaux de modèle BLC 200x200 fabriqué par la société CLERO, en un seul passage, à un débit de 60 kg/h et à une force minimale d'écartement F de 0,25 kN. Les deux rouleaux sont en contact.

Les grains de NZPlus®, respectivement mNZP sont ensuite tamisés à l'aide des tamis appropriés de façon à obtenir les différents grits désirés, à l'aide d'un séparateur SWECO, modèle 600 LS 24 S 544. Un contrôle du respect d'un des critères (1) à (7) est ensuite réalisé.

Afin d'évaluer la durée de vie des mélanges de grains, les mélanges ont été fixés sur des bandes abrasives en utilisant un procédé conventionnel de dépôt électrostatique.

Des pièces en acier ont été usinées, toujours de la même manière, au moyen de ces bandes abrasives, la pression des bandes sur les pièces étant maintenue constante et réglée de telle façon que le taux d'enlèvement de métal (exprimé en pouce x pouce x pouce, ou « in³ » en langue anglaise) par minute et par pouce de bande abrasive soit de 2,3 in³/min/in et de 5,9 in³/min/in. On a compté le nombre de pièces pouvant être usinées (« parts to burn »), avant l'apparition de signes de brûlure sur les pièces usinées.

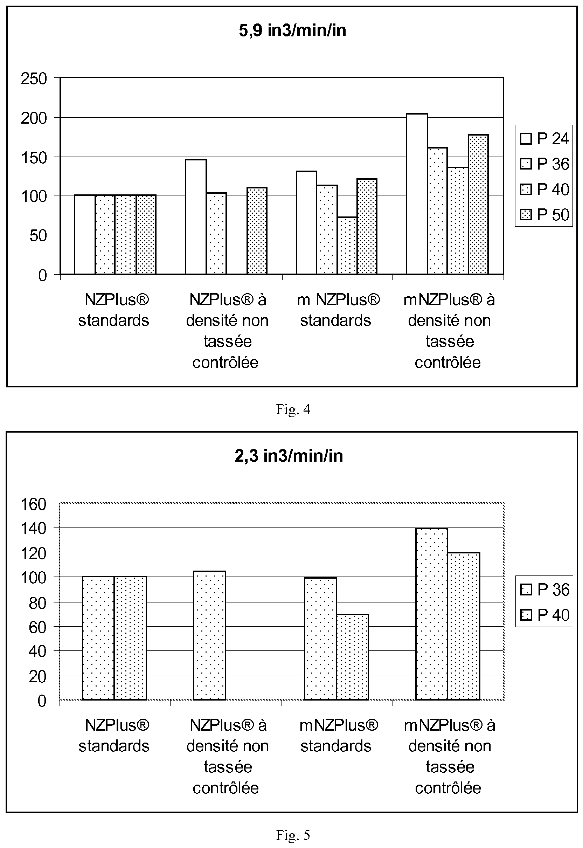

Le tableau 2 fournit les résultats obtenus, représentés graphiquement sur la figure 4, pour une pression sur la bande permettant un taux d'enlèvement de métal de 5,9 in³/min/in :

**Tableau 2**

| | P 24 | P 36 | P 40 | P50 |
|---|---|---|---|---|
| NZPlus® standards | 100 | 100 | 100 | 100 |
| NZPlus® à densité non tassée contrôlée | 144,6 | 103,1 | - | 111 |
| mNZP standards | 131,5 | 113,8 | 72,5 | 122 |
| mNZP à densité non tassée contrôlée | 204 | 160 | 135 | 178 |

Le tableau 3 fournit les résultats obtenus, représentés graphiquement sur la figure 5, pour une pression sur la bande permettant un taux d'enlèvement de métal de 2,3 in³/min/in :

**Tableau 3**

| | P 36 | P 40 |
|---|---|---|
| NZPlus® standards | 100 | 100 |
| NZPlus® à densité non tassée contrôlée | 104,3 | - |
| mNZP standards | 98,8 | 69,8 |
| mNZP à densité non tassée contrôlée | 139,5 | 119,4 |

Les tableaux 2 et 3 montrent d'abord que, contrairement à l'enseignement de US 5,161,696, dans un abrasif appliqué, une diminution de la densité non tassée peut ne pas améliorer sensiblement la durée de vie de l'abrasif. Ainsi, pour une granulométrie P36, le passage du NZPlus® standards au NZPlus® à densité non tassée contrôlée n'a quasiment pas d'impact sur les performances.

Ces tableaux montrent également l'importance considérable de la distribution granulométrique pour obtenir une amélioration de la durée de vie de l'abrasif. Ainsi, pour une granulométrie P24, le passage du NZPlus® standards au NZPlus® à densité non tassée contrôlée améliore considérablement les performances du mélange alors qu'il ne les améliore pas sensiblement pour une granulométrie P36.

Une comparaison des performances des grains NZPlus® et des grains mNZP montre aussi l'impact considérable de la composition chimique et de la microstructure :
Ainsi, pour une pression sur la bande permettant un taux d'enlèvement de métal de 5,9 in³/min/in, l'utilisation mélanges de grains « à densité non tassée contrôlée » à la place de mélanges de grains « standards » conduit à
- une amélioration d'un facteur de 1,44 pour les grains NZPlus® et de 1,55 pour les grains mNZP avec le Grit P24 ;
- une amélioration d'un facteur de 1,03 pour les grains NZPlus® et de 1,41 pour les grains mNZP avec le Grit P36 ;
- une amélioration d'un facteur de 1,86 pour les grains mNZP avec le Grit P40 ;
- une amélioration d'un facteur de 1,11 pour les grains NZPlus® et de 1,46 pour les grains mNZP avec le Grit P50.

Si l'effet d'un changement de forme des grains utilisés est variable pour les grains de NZPlus®, cet effet est toujours remarquablement positif, pour les grains mNZP. De manière inattendue, les inventeurs ont ainsi mis en évidence une véritable synergie entre les caractéristiques de composition et de forme.

Pour obtenir cette synergie, le critère de forme doit cependant être adapté à la granulométrie de la poudre.

De même, pour une pression sur la bande permettant un taux d'enlèvement de métal de 2,3 in³/min/in, l'utilisation de mélanges de grains « à densité contrôlée » à la place de mélanges de grains « standards » conduit à :
- une amélioration d'un facteur de 1,04 pour les grains NZPlus® et de 1,41 pour les grains mNZP avec le Grit P36 ;
- une amélioration d'un facteur de 1,71 pour les grains mNZP avec le Grit P40.

Les inventeurs ont ainsi découvert, pour une plage de compositions chimiques déterminée des conditions à imposer à la densité non tassée et à la distribution granulométrique d'un mélange de grains pour améliorer ses performances.

Le tableau 4 suivant illustre l'effet des conditions de broyage sur la densité non tassée pour des grains présentant la composition et la microstructure des grains mNZP.

Dans ce tableau, les mélanges « comparatifs » sont ceux obtenus à partir d'un broyage dans un broyeur à rouleaux mis en oeuvre avec un écartement entre les rouleaux nul et avec une recirculation des grains. Les mélanges « à densité non tassée contrôlée » sont obtenus par un broyage dans un broyeur à rouleaux, les rouleaux étant en contact, les grains ne traversant qu'une seule fois le broyeur (pas de recirculation) et la force minimale d'écartement F des rouleaux étant réglée à 0,25 kN.

Le tableau 4 illustre l'efficacité de ce réglage pour obtenir des mélanges de grains selon l'invention.

**Tableau 4**

| | | Composition massique | | | Concentration de nodules | Taux de grains contenant des inclusions | Densité non tassée |
|---|---|---|---|---|---|---|---|
| | | ZrO₂ (%) | Al₂O₃ (%) | Autres oxydes (%) | (nombre/mm²) | (%) | (g/cm³) |
| Grit P24 | Comparatif | 44,2 | Complément à 100 % | < 1,5 % | 1488 | 1,1 | 2,14 |
| | Densité non tassée contrôlée | | | | | | 2,06 |
| Grit P36 | Comparatif | 42,7 | | | 1040 | 1,48 | 2,06 |
| | Densité non tassée contrôlée | 41,6 | | | 1081 | 1,45 | 1,97 |
| | | 44,2 | | | 4842 | 1 | 1,95 |
| Grit P40 | Comparatif | 45 | | | 2307 | 0,58 | 1,98 |
| | Densité non tassée contrôlée | 44,4 | | | 2885 | 0,8 | 1,93 |
| Grit P50 | Comparatif | 44,2 | | | 1488 | 1,1 | 1,97 |
| | Densité non tassée contrôlée | 44,4 | | | 2140 | 0,62 | 1,92 |
| | | 42,2 | | | 1387 | 1,44 | |

Comme cela apparaît clairement à présent, l'invention fournit un mélange de grains abrasifs fondus alumine - zircone présentant une durée de vie supérieure, et en particulier capable d'atteindre des durées de vie 30 %, 40 %, voire 50 % supérieures à celles des mélanges actuels.

Bien entendu, la présente invention n'est cependant pas limitée aux modes de réalisation décrits et représentés fournis à titre d'exemples illustratifs et non limitatifs.

## Revendications

1. Mélange de grains d'alumine-zircone fondus présentant l'analyse chimique suivante, en pourcentages en poids,
| | |
|---|---|
| ZrO₂ + HfO₂ : | 35 - 45,5 % |
| Al₂O₃ : | 43,7 - 65% |
| Autres oxydes : | < 10 % |
| SiO₂ : | < 0,8 % |
ledit mélange de grains présentant un taux de grains contenant des inclusions inférieur à 5 %, la concentration de nodules mesurée sur une section d'un grain quelconque dudit mélange étant supérieure à 500 nodules par mm² dans au moins 50 % des grains observés, et étant **caractérisé en ce qu'**il présente une densité non tassée respectant au moins un des critères suivants :
(1) plus de 97 % en masse des grains ne traversent pas un tamis de maille carrée de 1400 µm de côté et moins de 20 % en masse des grains ne traversent pas un tamis de maille carrée de 2360 µm de côté, et la densité non tassée est supérieure à 2,18 g/cm³ et inférieure à 2,43 g/cm³ ;
(2) plus de 96 % en masse des grains ne traversent pas un tamis de maille carrée de 1000 µm de côté et moins de 3 % en masse des grains ne traversent pas un tamis de maille carrée de 1700 µm de côté, et la densité non tassée est supérieure à 2,04 g/cm³ et inférieure à 2,26 g/cm³ ;
(3) plus de 92 % en masse des grains ne traversent pas un tamis de maille carrée de 600 µm de côté et moins de 18 % en masse des grains ne traversent pas un tamis de maille carrée de 850 µm de côté, et la densité non tassée est supérieure à 1,94 g/cm³ et inférieure à 2,10 g/cm³;
(4) plus de 92 % en masse des grains ne traversent pas un tamis de maille carrée de 425 µm de côté et moins de 18 % en masse des grains ne traversent pas un tamis de maille carrée de 600 µm de côté, et la densité non tassée est supérieure à 1,85 g/cm³ et inférieure à 2,00 g/cm³;
(5) plus de 96 % en masse des grains ne traversent pas un tamis de maille carrée de 300 µm de côté et moins de 7 % en masse des grains ne traversent pas un tamis de maille carrée de 500 µm de côté, et la densité non tassée est supérieure à 1,83 g/cm³ et inférieure à 1,97 g/cm³;
(6) plus de 96 % en masse des grains ne traversent pas un tamis de maille carrée de 250 µm de côté et moins de 3 % en masse des grains ne traversent pas un tamis de maille carrée de 425 µm de côté, et la densité non tassée est supérieure à 1,82 g/cm³ et inférieure à 1,95 g/cm³;
(7) plus de 96 % en masse des grains ne traversent pas un tamis de maille carrée de 150 µm de côté et moins de 3 % en masse des grains ne traversent pas un tamis de maille carrée de 250 µm de côté, et la densité non tassée est supérieure à 1,79 g/cm³ et inférieure à 1,93 g/cm³;
le taux de grains contenant des inclusions étant le pourcentage en nombre de grains comportant au moins une inclusion, une inclusion étant une suite ou un amas de particules dont le constituant principal est un carbure ou une combinaison de carbures, en contact les unes avec les autres, la taille d'une inclusion étant supérieure à 10 µm,
la concentration de nodules étant le nombre de nodules par mm² de surface d'une section d'un grain, un nodule étant une particule dont le constituant principal est un métal ou une combinaison de métaux ou est un carbure ou une combinaison de carbures et dont la taille est inférieure ou égale à 10 µm.

2. Mélange selon la revendication précédente, dans lequel ladite concentration de nodules est supérieure à 600 nodules par mm².

3. Mélange selon l'une quelconque des deux revendications immédiatement précédentes, **caractérisé en ce que** ladite concentration de nodules est inférieure à 3500 nodules/mm².

4. Mélange selon l'une quelconque des revendications précédentes, présentant une densité non tassée respectant au moins un des critères suivants :
(1) plus de 97 % en masse des grains ne traversent pas un tamis de maille carrée de 1400 µm de côté et moins de 20 % en masse des grains ne traversent pas un tamis de maille carrée de 2360 µm de côté, et la densité non tassée est supérieure à 2,22 g/cm³ et inférieure à 2,36 g/cm³;
(2) plus de 96 % en masse des grains ne traversent pas un tamis de maille carrée de 1000 µm de côté et moins de 3 % en masse des grains ne traversent pas un tamis de maille carrée de 1700 µm de côté, et la densité non tassée est supérieure à 2,08 g/cm³ et inférieure à 2,19 g/cm³ ;
(3) plus de 92 % en masse des grains ne traversent pas un tamis de maille carrée de 600 µm de côté et moins de 18 % en masse des grains ne traversent pas un tamis de maille carrée de 850 µm de côté, et la densité non tassée est supérieure à 1,98 g/cm³;
(4) plus de 92 % en masse des grains ne traversent pas un tamis de maille carrée de 425 µm de côté et moins de 18 % en masse des grains ne traversent pas un tamis de maille carrée de 600 µm de côté, et la densité non tassée est supérieure à 1,89 g/cm³;
(5) plus de 96 % en masse des grains ne traversent pas un tamis de maille carrée de 300 µm de côté et moins de 7 % en masse des grains ne traversent pas un tamis de maille carrée de 500 µm de côté, et la densité non tassée est supérieure à 1,86 g/cm³;
(6) plus de 96 % en masse des grains ne traversent pas un tamis de maille carrée de 250 µm de côté et moins de 3 % en masse des grains ne traversent pas un tamis de maille carrée de 425 µm de côté, et la densité non tassée est supérieure à 1,86 g/cm³ et inférieure à 1,93 g/cm³;
(7) plus de 96 % en masse des grains ne traversent pas un tamis de maille carrée de 150 µm de côté et moins de 3 % en masse des grains ne traversent pas un tamis de maille carrée de 250 µm de côté, et la densité non tassée est supérieure à 1,83 g/cm³ et inférieure à 1,91 g/cm³.

5. Mélange selon l'une quelconque des revendications précédentes, **caractérisé en ce que**, en pourcentage en poids,
| | |
|---|---|
| ZrO₂ + HfO₂ : | 38 - 45,5 % |
| Al₂O₃ : | 43,7 - 62 % |
| Autres oxydes : | < 10 % |
| SiO₂ : | < 0,8 %. |

6. Mélange selon l'une quelconque des revendications précédentes, **caractérisé en ce que**, en pourcentage en poids,
| | |
|---|---|
| ZrO₂ + HfO₂ : | 40 - 45,5 % |
| Al₂O₃ : | 43,7 - 60 % |
| Autres oxydes : | < 10 % |
| SiO₂ : | < 0,8 %. |

7. Mélange selon l'une quelconque des revendications précédentes, dans lequel les grains respectant le critère (1), (2), (3), (4), (5), (6) ou (7) présentent un Grit F10, P16, P24, P36, P40, P50 ou P80, respectivement, le grit F10 étant mesurés selon la norme FEPA Standard 42-GB-1984, R1993 de la Fédération Européenne des Fabricants de Produits Abrasifs et les grits P16, P24, P36, P40, P50 ou P80 étant mesurés selon la norme FEPA Standard 43-GB-1984, R1993 de la Fédération Européenne des Fabricants de Produits Abrasifs .

8. Mélange selon l'une quelconque des revendications précédentes, dans lequel la concentration de nodules mesurée sur une section d'un grain quelconque dudit mélange est, dans au moins 90 % des cas, supérieure à 500 nodules par mm².

9. Mélange selon l'une quelconque des revendications précédentes, **caractérisé en ce qu'**il présente un taux de grains contenant des inclusions d'au plus 2 %.

10. Mélange selon l'une quelconque des revendications précédentes, **caractérisé en ce que** les « autres oxydes » comportent au moins un additif, ledit additif étant choisi dans le groupe formé par l'oxyde d'yttrium, l'oxyde de titane, les oxydes de magnésium, de calcium, les oxydes de néodyme, de lanthane, de cérium, de dysprosium, d'erbium, et de tout autre composé de la famille des terres rares, ou un mélange de ceux-ci.

11. Mélange selon l'une quelconque des revendications précédentes, **caractérisé en ce que**, en pourcentage en poids,
| | |
|---|---|
| Y₂O₃ : | 0,1 -1,2 %, et/ou |
| TiO₂ : | < 3 %, et/ou |
| SiO₂ : | < 0,4 % |

12. Mélange selon l'une quelconque des revendications précédentes, **caractérisé en ce que** le taux de grains contenant de la zircone primaire est compris entre 20 et 45 %.

13. Mélange selon l'une quelconque des revendications précédentes, **caractérisé en ce que** le taux de grains contenant du corindon primaire est compris entre 0 et 20 %.

14. Mélange selon l'une quelconque des revendications précédentes, présentant une densité non tassée respectant au moins un des critères suivants :
(2) plus de 96 % en masse des grains ne traversent pas un tamis de maille carrée de 1000 µm de côté et moins de 3 % en masse des grains ne traversent pas un tamis de maille carrée de 1700 µm de côté, et la densité non tassée est inférieure à 2,17 g/cm³;
(3) plus de 92 % en masse des grains ne traversent pas un tamis de maille carrée de 600 µm de côté et moins de 18 % en masse des grains ne traversent pas un tamis de maille carrée de 850 µm de côté, et la densité non tassée est inférieure à 2,05 g/cm³;
(4) plus de 92 % en masse des grains ne traversent pas un tamis de maille carrée de 425 µm de côté et moins de 18 % en masse des grains ne traversent pas un tamis de maille carrée de 600 µm de côté, et la densité non tassée est inférieure à 1,91 g/cm³.

15. Procédé pour fabriquer un mélange de grains selon l'une quelconque des revendications précédentes, comportant une étape de broyage de grains d'alumine-zircone fondus dans lequel les grains sont broyés par un unique passage dans un broyeur comportant au moins deux rouleaux écartés d'une distance « e » inférieure ou égale à 2 mm, la force minimale d'écartement des rouleaux, exprimée en kN, étant inférieure à 3,1.(e)²+22,81.(e)+2 , « e » étant exprimée en mm.

## Patentansprüche

1. Mischung von geschmolzenen Körnern aus Aluminiumoxid-Zirkoniumoxid, die die folgende chemische Analyse aufweist, in Gewichtsprozenten,
| | |
|---|---|
| ZrO₂ + HfO₂ : | 35 - 45,5 % |
| Al₂O₃ : | 43,7 - 65 % |
| Andere Oxide : | < 10 % |
| SiO₂ : | < 0,8 % |
wobei die besagte Mischung von Körnern einen Gehalt an Körnern, die Einschlüsse enthalten, von geringer als 5 % aufweist, und die Konzentration der Knoten, gemessen über einen Bereich eines beliebigen Korns der besagten Mischung, größer als 500 Knoten pro mm² in mindestens 50 % der betrachteten Körnern ist, und **dadurch gekennzeichnet ist, dass** diese eine Schüttdichte aufweist, die mindestens eine der folgenden Bedingungen einhält:
(1) Mehr als 97 % in Masse der Körner passieren nicht ein Sieb mit Quadratmasche mit einer Seitenlänge von 1400 µm, und weniger als 20 % in Masse der Körner passieren nicht ein Sieb mit Quadratmasche mit einer Seitenlänge von 2360 µm, und die Schüttdichte ist größer als 2,18 g/cm³ und geringer als 2,43 g/cm³;
(2) Mehr als 96 % in Masse der Körner passieren nicht ein Sieb mit Quadratmasche mit einer Seitenlänge von 1000 µm, und weniger als 3 % in Masse der Körner passieren nicht ein Sieb mit Quadratmasche mit einer Seitenlänge von 1700 µm, und die Schüttdichte ist größer als 2,04 g/cm³ und geringer als 2,26 g/cm³;
(3) Mehr als 92 % in Masse der Körner passieren nicht ein Sieb mit Quadratmasche mit einer Seitenlänge von 600 µm, und weniger als 18 % in Masse der Körner passieren nicht ein Sieb mit Quadratmasche mit einer Seitenlänge von 850 µm, und die Schüttdichte ist größer als 1,94 g/cm³ und geringer als 2,10 g/cm³;
(4) Mehr als 92 % in Masse der Körner passieren nicht ein Sieb mit Quadratmasche mit einer Seitenlänge von 425 µm, und weniger als 18 % in Masse der Körner passieren nicht ein Sieb mit Quadratmasche mit einer Seitenlänge von 600 µm, und die Schüttdichte ist größer als 1,85 g/cm³ und geringer als 2,00 g/cm³;
(5) Mehr als 96 % in Masse der Körner passieren nicht ein Sieb mit Quadratmasche mit einer Seitenlänge von 300 µm, und weniger als 7 % in Masse der Körner passieren nicht ein Sieb mit Quadratmasche mit einer Seitenlänge von 500 µm, und die Schüttdichte ist größer als 1,83 g/cm³ und geringer als 1,97 g/cm³;
(6) Mehr als 96 % in Masse der Körner passieren nicht ein Sieb mit Quadratmasche mit einer Seitenlänge von 250 µm, und weniger als 3 % in Masse der Körner passieren nicht ein Sieb mit Quadratmasche mit einer Seitenlänge von 425 µm, und die Schüttdichte ist größer als 1,82 g/cm³ und geringer als 1,95 g/cm³;
(7) Mehr als 96 % in Masse der Körner passieren nicht ein Sieb mit Quadratmasche mit einer Seitenlänge von 150 µm, und weniger als 3 % in Masse der Körner passieren nicht ein Sieb mit Quadratmasche mit einer Seitenlänge von 250 µm, und die Schüttdichte ist größer als 1,79 g/cm³ und geringer als 1,93 g/cm³;
wobei der Gehalt an Körnern, die Einschlüsse enthalten, der Prozentsatz in Zahlen der Körner ist, die mindestens einen Einschluss enthalten, wobei ein Einschluss eine Folge oder Anhäufung von Teilchen ist, dessen Hauptbestandteil ein Karbid ist oder eine Kombination von Karbiden, in Kontakt miteinander, wobei die Größe eines Einschlusses größer als 10 µm ist, wobei die Konzentration der Knoten die Zahl der Knoten pro mm² Fläche eines Bereichs eines Korns ist, wobei ein Knoten ein Teilchen ist, dessen Hauptbestandteil ein Metall ist, oder eine Kombination von Metallen oder ein Karbid ist oder eine Kombination von Karbiden und dessen Größe geringer als oder gleich 10 µm ist.

2. Mischung nach dem vorhergehenden Anspruch, wobei die besagte Konzentration der Knoten größer ist als 600 Knoten pro mm².

3. Mischung nach irgend einem der zwei unmittelbar vorhergehenden Ansprüche, **dadurch gekennzeichnet, dass** die besagte Konzentration der Knoten geringer ist als 3500 Knoten / mm².

4. Mischung nach irgend einem der vorhergehenden Ansprüche, die eine Schüttdichte aufweist, die mindestens eine der folgenden Bedingungen einhält:
(1) Mehr als 97 % in Masse der Körner passieren nicht ein Sieb mit Quadratmasche mit einer Seitenlänge von 1400 µm, und weniger als 20 % in Masse der Körner passieren nicht ein Sieb mit Quadratmasche mit einer Seitenlänge von 2360 µm, und die Schüttdichte ist größer als 2,22 g/cm³ und geringer als 2,36 g/cm³;
(2) Mehr als 96 % in Masse der Körner passieren nicht ein Sieb mit Quadratmasche mit einer Seitenlänge von 1000 µm, und weniger als 3 % in Masse der Körner passieren nicht ein Sieb mit Quadratmasche mit einer Seitenlänge von 1700 µm, und die Schüttdichte ist größer als 2,08 g/cm³ und geringer als 2,19 g/cm³;
(3) Mehr als 92 % in Masse der Körner passieren nicht ein Sieb mit Quadratmasche mit einer Seitenlänge von 600 µm, und weniger als 18 % in Masse der Körner passieren nicht ein Sieb mit Quadratmasche mit einer Seitenlänge von 850 µm, und die Schüttdichte ist größer als 1,98 g/cm³;
(4) Mehr als 92 % in Masse der Körner passieren nicht ein Sieb mit Quadratmasche mit einer Seitenlänge von 425 µm, und weniger als 18 % in Masse der Körner passieren nicht ein Sieb mit Quadratmasche mit einer Seitenlänge von 600 µm, und die Schüttdichte ist größer als 1,89 g/cm³;
(5) Mehr als 96 % in Masse der Körner passieren nicht ein Sieb mit Quadratmasche mit einer Seitenlänge von 300 µm, und weniger als 7 % in Masse der Körner passieren nicht ein Sieb mit Quadratmasche mit einer Seitenlänge von 500 µm, und die Schüttdichte ist größer als 1,86 g/cm³;
(6) Mehr als 96 % in Masse der Körner passieren nicht ein Sieb mit Quadratmasche mit einer Seitenlänge von 250 µm, und weniger als 3 % in Masse der Körner passieren nicht ein Sieb mit Quadratmasche mit einer Seitenlänge von 425 µm, und die Schüttdichte ist größer als 1,86 g/cm³ und geringer als 1,93 g/cm³;
(7) Mehr als 96 % in Masse der Körner passieren nicht ein Sieb mit Quadratmasche mit einer Seitenlänge von 150 µm, und weniger als 3 % in Masse der Körner passieren nicht ein Sieb mit Quadratmasche mit einer Seitenlänge von 250 µm, und die Schüttdichte ist größer als 1,83 g/cm³ und geringer als 1,91 g/cm³;

5. Mischung nach irgend einem der vorhergehenden Ansprüche, **dadurch gekennzeichnet, dass**, in Gewichtsprozent,
| | |
|---|---|
| ZrO₂ + HfO₂ : | 38 - 45,5 % |
| Al₂O₃ : | 43,7 - 62 % |
| Andere Oxide : | < 10 % |
| SiO₂ : | < 0,8 %. |

6. Mischung nach irgend einem der vorhergehenden Ansprüche, **dadurch gekennzeichnet, dass**, in Gewichtsprozent,
| | |
|---|---|
| ZrO₂ + HfO₂ : | 40 - 45,5 % |
| Al₂O₃ : | 43,7 - 60 % |
| Andere Oxide : | < 10 % |
| SiO₂ : | < 0,8 %. |

7. Mischung nach irgend einem der vorhergehenden Ansprüche, wobei die Körner, die die Bedingung (1), (2), (3), (4), (5), (6) oder (7) einhält, einen Grit F10, P16, P24, P36, P40, P50 oder P80, respektive, aufweisen, wobei der Grit F10 gemessen ist nach der Norm FEPA Standard 42-GB-1984, R1993 des Verbandes der Europäischen Schleifmittelhersteller, und die Grits P16, P24, P36, P40, P50 oder P80 gemessen ist nach der Norm FEPA Standard 43-GB-1984, R1993 des Verbandes der Europäischen Schleifmittelhersteller.

8. Mischung nach irgend einem der vorhergehenden Ansprüche, wobei die Konzentration der Knoten, gemessen über einen Bereich eines beliebigen Korns der besagten Mischung, in mindestens 90 % der Fälle, größer ist als 500 Knoten pro mm².

9. Mischung nach irgend einem der vorhergehenden Ansprüche, **dadurch gekennzeichnet, dass** diese einen Gehalt an Körnern, die Einschlüsse enthalten, von höchstens 2 % aufweist.

10. Mischung nach irgend einem der vorhergehenden Ansprüche, **dadurch gekennzeichnet, dass** die "anderen Oxide" mindestens einen Zusatzstoff enthalten, wobei der besagte Zusatzstoff ausgewählt ist aus der Gruppe gebildet aus Yttriumoxid, Titanoxid, Oxide von Magnesium, von Calcium, Oxide von Neodym, von Lanthan, von Cer, von Dysprosium, von Erbium, und von jeglicher anderer Verbindung der Familie der Seltenen Erden, oder eine Mischung aus diesen.

11. Mischung nach irgend einem der vorhergehenden Ansprüche, **dadurch gekennzeichnet, dass**, in Gewichtsprozent,
| | |
|---|---|
| Y₂O₃ : | 0,1 - 1,2 %, und/oder |
| TiO₂ : | < 3 %, und/oder |
| SiO₂ : | < 0,4 % |

12. Mischung nach irgend einem der vorhergehenden Ansprüche, **dadurch gekennzeichnet, dass** der Gehalt an Körnern, die primäres Zirkoniumoxid enthalten, enthalten ist zwischen 20 und 45 %.

13. Mischung nach irgend einem der vorhergehenden Ansprüche, **dadurch gekennzeichnet, dass** der Gehalt an Körnern, die primäres Korund enthalten, enthalten ist zwischen 0 und 20 %.

14. Mischung nach irgend einem der vorhergehenden Ansprüche, wobei diese eine Schüttdichte aufweist, die mindestens eine der folgenden Bedingungen einhält:
(2) Mehr als 96 % in Masse der Körner passieren nicht ein Sieb mit Quadratmasche mit einer Seitenlänge von 1000 µm, und weniger als 3 % in Masse der Körner passieren nicht ein Sieb mit Quadratmasche mit einer Seitenlänge von 1700 µm, und die Schüttdichte ist geringer als 2,17 g/cm³;
(3) Mehr als 92 % in Masse der Körner passieren nicht ein Sieb mit Quadratmasche mit einer Seitenlänge von 600 µm, und weniger als 18 % in Masse der Körner passieren nicht ein Sieb mit Quadratmasche mit einer Seitenlänge von 850 µm, und die Schüttdichte ist geringer als 2,05 g/cm³;
(4) Mehr als 92 % in Masse der Körner passieren nicht ein Sieb mit Quadratmasche mit einer Seitenlänge von 425 µm, und weniger als 18 % in Masse der Körner passieren nicht ein Sieb mit Quadratmasche mit einer Seitenlänge von 600 µm, und die Schüttdichte ist geringer als 1,91 g/cm³.

15. Verfahren zur Herstellung einer Mischung von Körnern nach irgend einem der vorhergehenden Ansprüche, welches einen Schritt der Zerkleinerung der geschmolzenen Körner aus Aluminiumoxid-Zirkoniumoxid enthält, wobei die Körner zerkleinert werden durch ein einmaliges Durchlaufen durch ein Mahlwerk welches mindestens zwei Walzen enthält, die um einen Abstand "e" von geringer als oder gleich 2 mm entfernt sind, wobei die minimale Kraft der Auslenkung der Walzen, ausgedrückt in kN, geringer ist als 3,1.(e)² + 22,81.(e) + 2, wobei "e" ausgedrückt ist in mm.

## Claims

1. A mixture of fused alumina/zirconia grains exhibiting the following chemical analysis, as percentages by weight:
| | |
|---|---|
| ZrO₂ + HfO₂: | 35 - 45.5% |
| Al₂O₃: | 43.7 - 65% |
| Other oxides: | < 10% |
| SiO₂ : | < 0.8%; |
said mixture of grains exhibiting a content of grains comprising inclusions of less than 5%, the concentration of nodules, measured over a cross section of any grain of said mixture, being greater than 500 nodules per mm² in at least 50% of the grains examined, and being **characterized in that** it exhibits a loose packed density observing at least one of the following criteria:
(1) more than 97% by weight of the grains do not pass through a sieve of square mesh with a side length of 1400 µm and less than 20% by weight of the grains do not pass through a sieve of square mesh with a side length of 2360 µm, and the loose packed density is greater than 2.18 g/cm³ and less than 2.43 g/cm³;
(2) more than 96% by weight of the grains do not pass through a sieve of square mesh with a side length of 1000 µm and less than 3% by weight of the grains do not pass through a sieve of square mesh with a side length of 1700 µm, and the loose packed density is greater than 2.04 g/cm³ and less than 2.26 g/cm³;
(3) more than 92% by weight of the grains do not pass through a sieve of square mesh with a side length of 600 µm and less than 18% by weight of the grains do not pass through a sieve of square mesh with a side length of 850 µm, and the loose packed density is greater than 1.94 g/cm³ and less than 2.10 g/cm³;
(4) more than 92% by weight of the grains do not pass through a sieve of square mesh with a side length of 425 µm and less than 18% by weight of the grains do not pass through a sieve of square mesh with a side length of 600 µm, and the loose packed density is greater than 1.85 g/cm³ and less than 2.00 g/cm³;
(5) more than 96% by weight of the grains do not pass through a sieve of square mesh with a side length of 300 µm and less than 7% by weight of the grains do not pass through a sieve of square mesh with a side length of 500 µm, and the loose packed density is greater than 1.83 g/cm³ and less than 1.97 g/cm³;
(6) more than 96% by weight of the grains do not pass through a sieve of square mesh with a side length of 250 µm and less than 3% by weight of the grains do not pass through a sieve of square mesh with a side length of 425 µm, and the loose packed density is greater than 1.82 g/cm³ and less than 1.95 g/cm³;
(7) more than 96% by weight of the grains do not pass through a sieve of square mesh with a side length of 150 µm and less than 3% by weight of the grains do not pass through a sieve of square mesh with a side length of 250 µm, and the loose packed density is greater than 1.79 g/cm³ and less than 1.93 g/cm³,
the content of grains containing inclusions being the percentage by number of grains comprising at least one inclusion, an inclusion being a string or a cluster of particles, the main constituent of which being a carbide or a combination of carbides, in contact with one another, the size of an inclusion being greater than 10 µm,
the concentration of nodules being the number of nodules per mm² of surface area of a cross section of a grain, a nodule being a particle, the main constituent of which being a metal or a combination of metals or being a carbide or a combination of carbides and the size of which being less than or equal to 10 µm.

2. The mixture as claimed in the preceding claim, in which said concentration of nodules is greater than 600 nodules per mm².

3. The mixture as claimed in either one of the two immediately preceding claims, **characterized in that** said concentration of nodules is less than 3500 nodules/mm².

4. The mixture as claimed in any one of the preceding claims, exhibiting a loose packed density observing at least one of the following criteria:
(1) more than 97% by weight of the grains do not pass through a sieve of square mesh with a side length of 1400 µm and less than 20% by weight of the grains do not pass through a sieve of square mesh with a side length of 2360 µm, and the loose packed density is greater than 2.22 g/cm³ and less than 2.36 g/cm³;
(2) more than 96% by weight of the grains do not pass through a sieve of square mesh with a side length of 1000 µm and less than 3% by weight of the grains do not pass through a sieve of square mesh with a side length of 1700 µm, and the loose packed density is greater than 2.08 g/cm³ and less than 2.19 g/cm³;
(3) more than 92% by weight of the grains do not pass through a sieve of square mesh with a side length of 600 µm and less than 18% by weight of the grains do not pass through a sieve of square mesh with a side length of 850 µm, and the loose packed density is greater than 1.98 g/cm³;
(4) more than 92% by weight of the grains do not pass through a sieve of square mesh with a side length of 425 µm and less than 18% by weight of the grains do not pass through a sieve of square mesh with a side length of 600 µm, and the loose packed density is greater than 1.89 g/cm³;
(5) more than 96% by weight of the grains do not pass through a sieve of square mesh with a side length of 300 µm and less than 7% by weight of the grains do not pass through a sieve of square mesh with a side length of 500 µm, and the loose packed density is greater than 1.86 g/cm³;
(6) more than 96% by weight of the grains do not pass through a sieve of square mesh with a side length of 250 µm and less than 3% by weight of the grains do not pass through a sieve of square mesh with a side length of 425 µm, and the loose packed density is greater than 1.86 g/cm³ and less than 1.93 g/cm³;
(7) more than 96% by weight of the grains do not pass through a sieve of square mesh with a side length of 150 µm and less than 3% by weight of the grains do not pass through a sieve of square mesh with a side length of 250 µm, and the loose packed density is greater than 1.83 g/cm³ and less than 1.91 g/cm³.

5. The mixture as claimed in any one of the preceding claims, **characterized in that**, as percentage by weight:
| | |
|---|---|
| ZrO₂ + HfO₂: | 38 - 45.5% |
| Al₂O₃: | 43.7 - 62% |
| Other oxides: | < 10% |
| SiO₂ : | < 0.8%. |

6. The mixture as claimed in any one of the preceding claims, **characterized in that**, as percentage by weight:
| | |
|---|---|
| ZrO₂ + HfO₂: | 40 - 45.5% |
| Al₂O₃: | 43.7 - 60% |
| Other oxides: | < 10% |
| SiO₂ : | < 0.8%. |

7. The mixture as claimed in any one of the preceding claims, in which the grains observing the criterion (1), (2), (3), (4), (5), (6) or (7) exhibit an F10, P16, P24, P36, P40, P50 or P80 grit respectively, the F10 grit being measured according to the FEPA standard, Standard 42-GB-1984, R1993, of the Fédération Européenne des Fabricants de Produits Abrasifs, [Federation of European Producers of Abrasives] and the P16, P24, P36, P40, P50 or P80 grits being measured according to the FEPA standard Standard 43-GB-1984, R1993, of the Fédération Européenne des Fabricants de Produits Abrasifs.

8. The mixture as claimed in any one of the preceding claims, in which the concentration of nodules, measured over a cross section of any grain of said mixture, is, in at least 90% of the cases, greater than 500 nodules per mm².

9. The mixture as claimed in any one of the preceding claims, **characterized in that** it exhibits a content of grains comprising inclusions of at most 2%.

10. The mixture as claimed in any one of the preceding claims, **characterized in that** the "other oxides" comprise at least one additive, said additive being chosen from the group formed by yttrium oxide, titanium oxide, magnesium and calcium oxides, neodymium, lanthanum, cerium, dysprosium and erbium oxides, oxides of any other compound of the family of the rare earth metals, and a mixture of these.

11. The mixture as claimed in any one of the preceding claims, **characterized in that**, as percentage by weight:
| | |
|---|---|
| Y₂O₃: | 0.1 -1.2%, and/or |
| TiO₂: | < 3%, and/or |
| SiO₂ : | < 0.4%. |

12. The mixture as claimed in any one of the preceding claims, **characterized in that** the content of grains comprising primary zirconia is between 20 and 45%.

13. The mixture as claimed in any one of the preceding claims, **characterized in that** the content of grains comprising primary corundum is between 0 and 20%.

14. The mixture as claimed in any one of the preceding claims, exhibiting a loose packed density observing at least one of the following criteria:
(2) more than 96% by weight of the grains do not pass through a sieve of square mesh with a side length of 1000 µm and less than 3% by weight of the grains do not pass through a sieve of square mesh with a side length of 1700 µm, and the loose packed density is less than 2.17 g/cm³;
(3) more than 92% by weight of the grains do not pass through a sieve of square mesh with a side length of 600 µm and less than 18% by weight of the grains do not pass through a sieve of square mesh with a side length of 850 µm, and the loose packed density is less than 2.05 g/cm³;
(4) more than 92% by weight of the grains do not pass through a sieve of square mesh with a side length of 425 µm and less than 18% by weight of the grains do not pass through a sieve of square mesh with side length of 600 µm, and the loose packed density is less than 1.91 g/cm³.

15. A process for manufacturing a mixture of grains according to any preceding claim, comprising a step of grinding fused alumina/zirconia grains in which the grains are ground by a single pass through a mill comprising at least two rolls separated by a distance "e" of less than or equal to 2 mm, the minimum force for separating the rolls, expressed in kN, being less than 3.1×(e)²+22.81×(e)+2, "e" being expressed in mm.
